# EUROPÄISCHE PATENTSCHRIFT

(11) **EP 0 318 856 B1**
(45) Veröffentlichungstag und Bekanntmachung des Hinweises auf die Patenterteilung: **19.01.1994**
(21) Anmeldenummer: 88119657.0
(22) Anmeldetag: 25.11.1988
(51) Int. Cl.: C07F 7/12

(54) **Si, Si'-Diorganyl-N-alkyl-tetrachlor-disilazane und Verfahren zu ihrer Herstellung**
Si, Si'-diorgano-N-alkyl-tetrachloro-disilazanes and process for their preparation
Si, Si'-diorgano-N-alcoyl tétrachloro-disilazane et procédé de leur préparation

(30) Priorität: 04.12.1987 DE 3741060
(43) Veröffentlichungstag der Anmeldung: 07.06.1989
(73) Patentinhaber: HOECHST AKTIENGESELLSCHAFT, 65926 Frankfurt am Main (DE)
(72) Erfinder: Vaahs, Tilo, Dr., D-6233 Kelkheim (Taunus) (DE)

(56) Entgegenhaltungen:
- J. CHEM. SOC. (A), Band 22, 1971, Seiten 3617-3620; J.E. DRAKE et al.: "Chlorosilylamines"
- CHEMICAL ABSTRACTS, Band 67, 1967, Seite 3105, Zusammenfassung Nr. 32728t, Columbus, Ohio, US; U. WANNAGAT et al.: "Reactions of hexachlorodisilazane", & ANGEW. CHEM. INT. ED. ENGL. 1(5), 447-8(1967)
- CHEMISCHE BERICHTE, Band 107, 1974, Seiten 518-528; H. NÖTH et al.: "14N- und 11B-Kernresonanzstudien an Silylaminen und Silylaminoboranen"

## Beschreibung

Die vorliegende Erfindung betrifft ein Verfahren zur Herstellung von Si, Si′-Diorganyl-N-alkyl-tetrachlordisilazanen der Formel RSiCl₂-NR′-SiCl₂R, worin R = C₁-C₄-Alkyl, Vinyl oder Phenyl und R′ = C₁-C₄-Alkyl ist, sowie diese Verbindungen selbst, mit Ausnahme derjenigen mit R = R′ = CH₃. Die letztgenannte Verbindung ist bereits bekannt und wurde bisher durch Umsilylierung des vollmethylierten Disilazans (CH₃)₃Si-N(CH₃)-Si(CH₃)₃ erhalten (J. P. Mooser et al., Z, Naturforsch. 29 b (1974) 166 - 173):

(CH₃)₃Si-N(CH₃)-Si(CH₃)₃ + 2 (CH₃)SiCl₃ → → Cl₂(CH₃)Si-N(CH₃)-Si(CH₃)Cl₂ + 2 (CH₃)₃SiCl

Dieses Verfahren besitzt den Nachteil, daß drastische Reaktionsbedingungen (Rückfluß, 40 Tage Reaktionszeit) notwendig sind und zusätzlich Aluminiumchlorid zugegeben werden muß, damit eine vollständige Umsetzung erzielt wird. Zusätzlich tritt als Nebenprodukt Trimethylchlorsilan auf.

Die vorliegende Erfindung löst die Aufgabe, diese Verbindung und eine Reihe ihrer höheren Homologen auf einfache Weise herzustellen.

Gegenstand der vorliegenden Erfindung ist ein Verfahren zur Herstellung von Si, Si′-Diorganyl-N-alkyl-tetrachlor-disilazanen der Formel RSiCl₂-NR′-SiCl₂R, worin R = C₁-C₄-Alkyl, Vinyl oder Phenyl und R′ = C₁-C₄-Alkyl ist, dadurch gekennzeichnet, daß man Organyltrichlorisilane RSiCl₃ und Monoalkylamine R′NH₂, wobei R und R′ die genannte Bedeutung haben, in einem aprotischen Lösungsmittel bei einer Temperatur von -10°C bis +70°C miteinander umsetzt, wobei das Molverhältnis RSiCl₃ : R′NH₂ mindestens 0,3 : 1 beträgt.

Vorzugsweise ist R = Methyl, Ethyl, Vinyl, Phenyl und R′ = Methyl. Insbesondere ist R = Ethyl und R′ = Methyl. Das Molverhältnis RSiCl₃ : R′NH₂ beträgt vorzugsweise 0,3 : 1 bis 1 : 1, insbesondere 0,5 : 1 bis 0,7 : 1. Natürlich führt auch ein Molverhältnis RSiCl₃ : R′NH₂ von mehr als 1 : 1, etwa 2 : 1, zum Erfolg, aber ein derartiger Überschuß an RSiCl₃ ist überflüssig, und der unumgesetzte Anteil muß vom erwünschten Dichlorsilazan abgetrennt werden.

Die Reaktionstemperatur liegt bevorzugt bei 0°C bis +20°C. Vorzugsweise verwendet man polare aprotische Lösungsmittel, insbesondere Ether.

Die Reaktionsgleichung lautet:

2 RSiCl₃ + 3 H₂NR′ → RSiCl₂-NR′-SiCl₂R + 2 H₂NR′·HCl

Aus Mischungen der Organyltrichlorisilane erhält man das Gemisch der möglichen Disilazane, z. B. aus dem binären Gemisch von CH₃SiCl₂ und (C₂H₃)SiCl₃ durch Umsetzung mit CH₃NH₂ das ternäre Gemisch aus CH₃SiCl₂-N(CH₃)-SiCl₂CH₃, (C₂H₃)SiCl₂-N(CH₃)-SiCl₂)C₂H₃) und (C₂H₃)SiCl₂-N(CH₃)-SiCl₂CH₃.

Die erfindungsgemäßen Si, Si′-Diorganyl-N-alkyl-tetrachlor-disilazane können durch Umsetzung mit mindestens 6,7 Mol Ammoniak pro Mol Chlordisilazan in aprotischen Lösungsmitteln, vorzugsweise THF, bei -80°C bis +70°C, vorzugsweise bei -10°C bis 0°C zu polymeren Silazanen umgesetzt werden. Diese können anschließend durch Pyrolyse in Stickstoff- oder Argonatmosphäre bei 800 bis 1400°C in Siliziumnitrid enthaltende keramische Materialien umgewandelt werden. Die polymeren Silazane lösen sich in allen üblichen aprotischen Lösungsmitteln. Sie können vor der Pyrolyse zu dreidimensionalen Formkörpern geformt werden, beispielsweise durch einachsiales oder isostatisches pressen, Schlickergießen oder Extrudieren.

### Beispiel 1

In einem 500 ml Dreihalskolben mit Kühl- und Rührvorrichtung löste man unter Stickstoffatmosphäre 50 ml (63,5 g; 0,42 mol) Methyltrichlorsilan in 300 ml trockenem THF. Der Kühlfinger wurde auf -78°C gekühlt (Trockeneis), die Lösung auf -10°C. Nun leitete man 25,7 ml (19,8 g; 0,64 mol) Methylamin so ein, daß die Innentemperatur nicht über -5°C stieg. Das entstandene Methylammoniumchlorid wurde nach Erwärmung auf 20°C abfiltriert.
Das Filtrat wurde einer Feindestillation unterworfen.
Bei 96°C und 81 mbar destillierten 22,5 g des Si, Si′-Dimethyl-N-Methyl-tetrachlorsilazans über (Ausbeute 42 %).
¹H-NMR-Daten:
N(CH₃) δ = 2,8 ppm, Intensität : 1 Singulett
Si(CH₃) δ = 0,95 ppm, Intensität : 2 Singulett

### Beispiel 2

In einem 1 l-Dreihalskolben mit Kühlfinger und Rührvorrichtung wurden unter Stickstoff 0,6 mol (96,9 g; 76,3 ml) Vinyltrichlorsilan in 700 ml trockenem THF gelöst. Der Kühlfinger wurde auf -78°C (Trockeneis) und die Lösung auf 0°C gekühlt. Nun wurden 27,9 g (0,9 mol) Methylamin eingeleitet.

Das entstandene Methylaminhydrochlorid wurde abgesaugt und das Filtrat einer Destillation unterworfen.
Bei 142°C und 81 mbar destillierten 50,6 g (0,18 mol; Ausbeute 60 %) über.
¹H-NMR-Daten in CDCl₃:
N(CH₃) δ = 2,85 ppm Singulett
Si(C₂H₃) δ = 6,2 ppm Multiplett

### Beispiel 3

In einem 1 l-Dreihalskolben mit Kühlfinger und Rührvorrichtung wurden unter Stickstoff 0,6 mol (98,1 g; 79,1 ml) Ethyltrichlorsilan in 700 ml THF gelöst. Der Kühlfinger wurde auf -78°C und die Lösung auf 0°C gekühlt. Nun wurden 27,9 g (0,9 mol) Methylamin eingeleitet.
Das entstandene Methylaminhydrochlorid wurde abgesaugt und das Filtrat einer Destillation unterworfen.
Bei 64°C und 14 mbar destillierten 107,8 g (0,28 mol; Ausbeute 93 %) über.
¹H-NMR-Daten in CDCl₃:
N(CH₃) δ = 2,87 ppm Singulett
Si(C₂H₅) δ = 1,15 ppm Multiplett

### Beispiel 4

In einem 1 l-Dreihalskolben mit Kühlfinger und Rührvorrichtung wurden unter Stickstoff 0,3 mol (48,4 g; 38,1 ml) Vinyltrichlorsilan und 0,3 mol (49 g; 39,6 ml) Ethyltrichlorsilan in 700 ml THF gelöst. Der Kühlfinger wurde auf -78°C und die Lösung auf 0°C gekühlt. Nun wurden 27,9 g (0,9 mol) Methylamin eingeleitet. Das entstandene Methylaminhydrochlorid wurde abgesaugt und das Filtrat einer Destillation unterworfen.
Bei 70 bis 80°C und 14 mbar destillierten 43,2 g des Gemisches aller drei möglichen Isomeren über.
¹H-NMR-Daten von Cl₂(C₂H₃)Si-N(CH₃)-Si(C₂H₅)Cl₂ in CDCl₃:
N(CH₃) δ = 2,37 ppm Singulett
Si(C₂H₃) δ = 6,2 ppm Multiplett
Si(C₂H₅) δ = 1,15 ppm Multiplett

## Patentansprüche

1. Verfahren zur Herstellung von Si, Si′-Diorganyl-N-alkyl-tetrachlor-disilazanen der Formel RSiCl₂-NR′-SiCl₂R, worin R = C₁-C₄-Alkyl, Vinyl oder Phenyl und R′ = C₁-C₄-Alkyl ist, dadurch gekennzeichnet, daß man Organyltrichlorsilane RSiCl₃ und Monoalkylamine R′NH₂, wobei R und R′ die genannte Bedeutung haben, in einem aprotischen Lösungsmittel bei einer Temperatur von -10°C bis +70°C miteinander umsetzt, wobei das Molverhältnis RSiCl₃ : R′NH₂ mindestens 0,3 : 1 beträgt.

2. Verfahren nach Anspruch 1, dadurch gekennzeichnet, daß das Molverhältnis RSiCl₃ : R′NH₂ 0,3 : 1 bis 1 : 1 beträgt.

3. Verfahren nach Anspruch 1, dadurch gekennzeichnet, daß das Molverhältnis RSiCl₃ : R′NH₂ 0,5 : 1 bis 0,7 : 1 beträgt.

4. Verfahren nach einem der Ansprüche 1 bis 3, dadurch gekennzeichnet, daß R = Methyl, Ethyl, Vinyl oder Phenyl und R′ = Methyl ist.

5. Verfahren nach einem der Ansprüche 1 bis 3, dadurch gekennzeichnet, daß R = Ethyl und R′ = Methyl ist.

6. Verfahren nach einem der Ansprüche 1 bis 5, dadurch gekennzeichnet, daß man einen Ether als aprotisches Lösungsmittel verwendet.

7. Si, Si′-Diorganyl-N-alkyl-tetrachlor-disilazane der Formel RSiCl₂-NR′-SiCl₂R, worin R = C₁-C₄-Alkyl, Vinyl oder Phenyl und R′ = C₁-C₄-Alkyl ist, ausgenommen R = R′ = CH₃.

8. Si, Si'-Diorganyl-N-alkyl-tetrachlor-disilazane nach Anspruch 7, dadurch gekennzeichnet, daß R = Ethyl, Vinyl oder Phenyl und R' = Methyl ist.

9. Si, Si'-Diorganyl-N-alkyl-tetrachlor-disilazane nach Anspruch 7, dadurch gekennzeichnet, daß R = Ethyl und R' = Methyl ist.

## Claims

1. A process for the preparation of an Si,Si'-diorganyl-N-alkyl-tetrachloro-disilazane of the formula RSiCl₂-NR'-SiCl₂R, in which R is C₁-C₄-alkyl, vinyl or phenyl and R' is C₁-C₄-alkyl, which comprises reacting an organyltrichlorosilane RSiCl₃ and a monoalkylamine R'NH₂, in which R and R' have the meaning given, with one another in an aprotic solvent at a temperature of -10°C to +70°C, the molar ratio of RSiCl₃ : R'NH₂ being at least 0.3 : 1.

2. The process as claimed in claim 1, wherein the molar ratio of RSiCl₃ : R'NH₂ is 0.3 : 1 to 1 : 1.

3. The process as claimed in claim 1, wherein the molar ratio of RSiCl₃ : R'NH₂ is 0.5 : 1 to 0.7 : 1.

4. The process as claimed in any one of claims 1 to 3, wherein R is methyl, ethyl, vinyl or phenyl and R' is methyl.

5. The process as claimed in any one of claims 1 to 3, wherein R is ethyl and R' is methyl.

6. The process as claimed in any one of claims 1 to 5, wherein an ether is used as the aprotic solvent.

7. An Si,Si'-diorganyl-N-alkyl-tetrachloro-disilazane of the formula RSiCl₂-NR'-SiCl₂R, in which R is C₁-C₄-alkyl, vinyl or phenyl and R' is C₁-C₄-alkyl, excluding R = R' = CH₃.

8. An Si,Si'-diorganyl-N-alkyl-tetrachloro-disilazane as claimed in claim 7, wherein R is ethyl, vinyl or phenyl and R' is methyl.

9. An Si,Si'-diorganyl-N-alkyl-tetrachloro-disilazane as claimed in claim 7, wherein R is ethyl and R' is methyl.

## Revendications

1. Procédé pour la préparation de Si,Si'-diorgano-N-alkyl-dans tétrachloro-disilazanes de formule RSiCl₂-NR'-SiCl₂R, dans laquelle R = alkyle en C₁-C₄, vinyle ou phényle et R' = alkyle en C₁-C₄, caractérisé en ce qu'on fait réagir ensemble l'organotrichlorosilane RSiCl₃ avec la monoalkylamine R'NH₂, R et R' ayant la signification donnée, dans un solvant aprotique à une température allant de -10°C à +70°C, le rapport molaire RSiCl₃ : R'NH₂ étant d'au moins 0,3:1.

2. Procédé selon la revendication 1, caractérisé en ce que le rapport molaire RSiCl₃:R'NH₂ est de 0,3:1 à 1:1.

3. Procédé selon la revendication 1, caractérisé en ce que le rapport molaire RSiCl₃ : R'NH₂ est de 0,5:1 à 0,7:1.

4. Procédé selon l'une des revendications 1 à 3, caractérisé en ce que R = méthyle, éthyle, vinyle ou phényle et R' = méthyle.

5. Procédé selon l'une des revendication 1 à 3, caractérisé en ce que R = éthyle, et R' = méthyle.

6. Procédé selon l'une des revendications 1 à 5, caractérisé en ce qu'on utilise un éther en tant que solvant aprotique.

7. Si,Si'-diorgano-N-alkyl-tétrachloro-disilazanes de formule RSiCl₂-NR'-SiCl₂R, dans laquelle R = alkyle en C₁-C₄, vinyle ou phényle et R' = alkyle en C₁-C₄, sauf R = R' = CH₃.

8. Si,Si'-diorgano-N-alkyl-tétrachloro-disilazanes selon la revendication 7, caractérisés en ce que R = éthyle, vinyle ou phényle et R' = méthyle.

9. Si,Si'-diorgano-N-alkyl-tétrachloro-disilazanes selon la revendication 7, caractérisés en ce que R = éthyle et R' = méthyle.
